# EUROPÄISCHE PATENTSCHRIFT

(11) **EP 2 929 089 B1**
(45) Veröffentlichungstag und Bekanntmachung des Hinweises auf die Patenterteilung: **07.03.2018**
(21) Anmeldenummer: 12813289.1
(22) Anmeldetag: 06.12.2012
(51) Int. Cl.: E01B 19/00

(54) **SCHWINGUNGSABSORBERANORDNUNG**
VIBRATION ABSORBER ARRANGEMENT
SYSTÈME AMORTISSEUR DE VIBRATIONS

(43) Veröffentlichungstag der Anmeldung: 14.10.2015
(73) Patentinhaber: Veit, Günther, 55411 Bingen (DE)
(72) Erfinder: Veit, Günther, 55411 Bingen (DE)
(74) Vertreter: Isarpatent
(86) Internationale Anmeldenummer: PCT/EP2012/074714
(87) Internationale Veröffentlichungsnummer: WO 2014/086426

(56) Entgegenhaltungen:
- EP-A2- 2 298 992
- JP-A- 2006 144 409

## Beschreibung

Die vorliegende Erfindung betrifft eine Schwingungsabsorberanordnung zum Anbringen mindestens eines Schwingungsabsorbers an eine Schiene.

Die EP 2 298 992 A2 beschreibt eine Schwingungsabsorberanordnung zum Anbringen mindestens eines Schwingungsabsorbers an einer Schiene mit: Einer Rippenplatte mit zwei auf der Oberseite vorgesehenen im Wesentlichen parallel verlaufenden Rippen, welche derart unterhalb eines Schienenfußes anbringbar ist, dass beiderseits des Schienenfußes eine Rippe angeordnet ist; einer ersten Bügeleinrichtung, welche zum Abstützen auf dem Schienenfuß an einer der beiden Rippen anordnbar ist; einer zweiten Bügeleinrichtung, welche zum Abstützen auf dem Schienenfuß an der anderen der beiden Rippen anordnbar ist; einer ersten Klemmeinrichtung, welche in einem ersten Bereich zwischen eine der beiden Bügeleinrichtungen und den Schienenfuß einklemmbar ist und welche derart anordnbar ist, dass sie in einem zweiten Bereich gegen einen Schienensteg presst; und einem ersten Schwingungsabsorber, der an der vom Schienensteg abgewandten Seite der ersten Klemmeinrichtung anbringbar ist; wobei die erste Klemmeinrichtung eine Winkelplatte mit dem ersten und dem davon abgewinkelten zweiten Bereich ist; wobei der erste Schwingungsabsorber auf dem zweiten Bereich anbringbar ist; und wobei die erste und die zweite Bügeleinrichtung in einem auf den beiden Rippen angeordneten Zustand den Schienenfuß und die Rippenplatte zumindest teilweise umgreifen.

Die DE 297 14 904 U1 beschreibt einen Schwingungsabsorber für eine Eisenbahnschiene, der am Schienensteg mit Klemmfedern angeklemmt wird. Der Schwingungsabsorber ist am Schienenfuß mit einer kraftschlüssigen Verbindung verschraubt.

Aus der EP 1 693 516 A1 ist eine Schwingungsabsorberanordnung bekannt, zum Anbringen mindestens eines Schwingungsabsorbers an einer Schiene. Die Schwingungsabsorberanordnung weist hierbei eine Rippenplatte auf, mit zwei auf der Oberseite vorgesehenen im Wesentlichen parallelen Rippen, welche derart unterhalb des Schienenfußes anbringbar ist, dass beiderseits der Schiene eine Rippe angeordnet ist. Des Weiteren weist die Schwingungsabsorberanordnung ein erstes Stützprofil auf, welches zum Abstützen auf dem Schienenfuß an einer der beiden Rippen anbringbar ist, sowie ein zweites Stützprofil, welches zum Abstützen auf dem Schienenfuß an der anderen der beiden Rippen anbringbar ist. Außerdem weist die Schwingungsabsorberanordnung eine erste Klemmeinrichtung auf, welche an einem ersten Ende zwischen eines der beiden Stützprofile und dem Schienenfuß einklemmbar ist und welche derart anordenbar ist, dass sie an einem zweiten Ende gegen den Schienensteg presst. Weiter weist die Schwingungsabsorberanordnung einen ersten Schwingungsabsorber auf, der an der vom Schienensteg abgewandten Seite der ersten Klemmeinrichtung anbringbar ist, wobei die erste Klemmeinrichtung eine Winkelplatte mit dem ersten und dem davon abgewinkelten zweiten Bereich ist, und der erste Schwingungsabsorber auf dem zweiten Bereich anbringbar ist.

Der Erfindung liegt nun die Aufgabe zugrunde, eine verbesserte Schwingungsabsorberanordnung bereitzustellen.

Gemäß der Erfindung wird eine Schwingungsabsorberanordnung zum Anbringen wenigstens eines Schwingungsabsorbers an einer Schiene bereitgestellt, wie im unabhängigen Anspruch 1 definiert.

Die Schwingungsabsorberanordnung gemäß der Erfindung hat den Vorteil, dass der einstückige Federbügel einfach an der Klemmeinrichtung zu montieren und kostengünstig in der Herstellung ist, da keine weiteren Einzelteile benötigt werden.

Vorteilhafte Ausgestaltungen und Weiterbildungen der Erfindung ergeben sich aus den Unteransprüchen sowie der Beschreibung unter Bezugnahme auf die Zeichnungen.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

In einer bevorzugten Weiterbildung liegt die Klemmeinrichtung zumindest in einem Abschnitt oder vollständig an der Schiene auf. Zwischen zumindest der Auflage der Klemmeinrichtung an der Schiene ist dabei wenigstens eine Dämpfungsschicht vorgesehen ist. Die Dämpfungsschicht ist dabei beispielsweise an einer Innenseite der Klemmeinrichtung befestigt. Die Dämpfungsschicht hat den Vorteil, dass die Klemmeinrichtung selbst als Dämpfung wirkt. Außerdem lässt sich die Dämpfungsschicht, wie eine Gummischicht, besonders einfach an der Klemmeinrichtung vorab anbringen durch Aufkleben oder Vulkanisieren.

Gemäß einer weiteren bevorzugten Weiterbildung weist die Klemmeinrichtung einen Vorsprung auf zum Einhängen, beispielsweise lose Einhängen, oder Einrasten eines Endes des Federbügels. Der Vorsprung hat den Vorteil, dass er ein Wegfliegen des Federbügels beim Demontieren verhindert. Beim Montieren kann der Federbügel wiederum leichter an der Klemmeinrichtung positioniert werden.

In einer anderen bevorzugten Weiterbildung weist die Klemmeinrichtung in Längsrichtung wenigstens einen Anschlag für den Federbügel auf. Der Anschlag hat den Vorteil, dass er verhindert, dass der Federbügel sich in Längsrichtung der Klemmeinrichtung nicht ungewollt über den Anschlag hinaus bewegen kann. Die Klemmeinrichtung kann des Weiteren in Längsrichtung zwei Anschläge aufweisen, zwischen die der Federbügel einlegbar ist. Des Weiteren kann dabei zusätzlich der Vorsprung zwischen den Anschlägen angeordnet sein zum Einhängen oder Einrasten des Federbügels an dem Vorsprung.

Erfindungsgemäß weist der Federbügel wenigstens einen oder zwei Schenkel auf, mit jeweils einem ersten und einem zweiten Abschnitt und einem dazwischen angeordneten mittleren Abschnitt. Der mittlere Abschnitt erstreckt sich dabei entlang der Unterseite des Schienenfußes. Der erste Abschnitt erstreckt sich wiederum von dem mittleren Abschnitt aus nach oben entlang einer Seite des Schienenfußes zum Einhaken des Federbügels an dieser Seite des Schienenfußes. Dadurch wird erreicht, dass der Federbügel von dieser Seite an dem Schienenfuß gehalten wird. Der zweite Abschnitt erstreckt sich von dem mittleren Abschnitt aus nach oben entlang der gegenüberliegenden Seite des Schienenfußes und anschließend entlang der Klemmeinrichtung, derart dass der zweite Abschnitt den Klammerbefestigungsabschnitt umgreift und gegen die Schiene presst, während der Federbügel mit dem ersten Abschnitt an der anderen Seite des Schienenfußes gehalten wird. Der Federbügel mit zwei Schenkeln hat außerdem den Vorteil, dass er sich über einen größeren Bereich der Schiene und der Klemmeinrichtung erstreckt und daher in montiertem Zustand sehr stabil an der Schiene und der Klemmeinrichtung sitzt.

Gemäß noch einer weiteren bevorzugten Weiterbildung sind zwei Schenkel vorgesehen und wenigstens die beiden zweiten Abschnitte der zwei Schenkel miteinander verbunden und bilden ein geschlossenes Ende des Federbügels. Mit dem geschlossenen Ende kann der Federbügel an dem Vorsprung auf der Außenseite der Klemmeinrichtung eingehängt oder eingerastet werden und so ein Wegspringen des Federbügels beim Demontieren verhindert werden.

In einer anderen bevorzugten Weiterbildung weist die Klemmeinrichtung einen Haltevorsprung auf, wobei der Haltevorsprung beispielsweise an oder benachbart zu einer Endkante des Klammerbefestigungsabschnitts der Klemmeinrichtung angeordnet ist. Der Haltevorsprung kann dabei einteilig mit der Klemmeinrichtung ausgebildet oder als separates Teil an der Klemmeinrichtung befestigt werden und beispielsweise aus Metall und/oder Gummi bestehen oder dieses zumindest aufweisen. Der Haltevorsprung wirkt ebenfalls einem unerwünschten Wegspringen des Federbügels beim Demontieren entgegen und dient außerdem als Montagehilfe.

Gemäß einer weiteren bevorzugten Weiterbildung weist der Klammerbefestigungsabschnitt der Klemmeinrichtung wenigstens eine abgeschnittene Ecke auf. Dadurch kann das Gewicht und das Material der Klemmeinrichtung reduziert werden, ohne die Funktion des Federbügels zu beeinträchtigen-

In einer bevorzugten Weiterbildung ist das äußere Ende des jeweils ersten Abschnitts des Federbügels und damit des offenen Endes des Federbügels nach außen gewölbt oder nach außen von der Schiene zusätzlich weggebogen. Dadurch können unerwünschte Einkerbungen aufgrund von scharfen Enden des Federbügels verhindert werden.

Die Erfindung wird nachfolgend anhand der in den schematischen Figuren der Zeichnungen angegebenen Ausführungsbeispiele näher erläutert. Es zeigen:
Fig. 1 eine Perspektivansicht einer Schiene mit einer Schwingungsabsorberanordnung gemäß einer ersten Ausführungsform der Erfindung;
Fig. 2 eine Perspektivansicht einer Klammer zum Befestigen einer Klemmeinrichtung und deren Schwingungsabsorber an der Schiene gemäß Fig. 1;
Fig. 3 eine Vorderansicht der Schiene und der daran befestigten Klemmeinrichtungen mit ihren Schwingungsabsorbern gemäß der Fig. 1 und 2;
Fig. 4 eine Seitenansicht der Schiene 1 und der Schwingungsabsorberanordnung 2 gemäß Fig. 1;
Fig. 5 eine Perspektivansicht einer Schiene 1 mit einer zweiten Ausführungsform einer Schwingungsabsorberanordnung 2 gemäß der Erfindung;
Fig. 6 eine Seitenansicht der Schiene und der Schwingungsabsorberanordnung gemäß Fig. 5;
Fig. 7 eine Seitenansicht der Schiene und der daran befestigten Klemmeinrichtungen mit ihren Schwingungsabsorbern gemäß Fig. 5 und 6 gezeigt.
Fig. 8 eine Seitenansicht einer Klammer gemäß einem weiteren erfindungsgemäßen Ausführungsbeispiel;
Fig. 9 eine Perspektivansicht der Klammer gemäß Fig. 8;
Fig. 10 eine Perspektivansicht einer Klemmeinrichtung mit einem Schwingungsabsorber gemäß einer erfindungsgemäßen Schwingungsabsorberanordnung; und
Fig. 11 ein Ausschnitt der Klemmeinrichtung und ihres Schwingungsabsorbers gemäß Fig. 10.

In den Figuren der Zeichnung sind gleiche, funktionsgleiche und gleichwirkende Elemente, Merkmale und Komponenten - sofern nichts Anderes ausführt ist - jeweils mit denselben Bezugszeichen versehen.

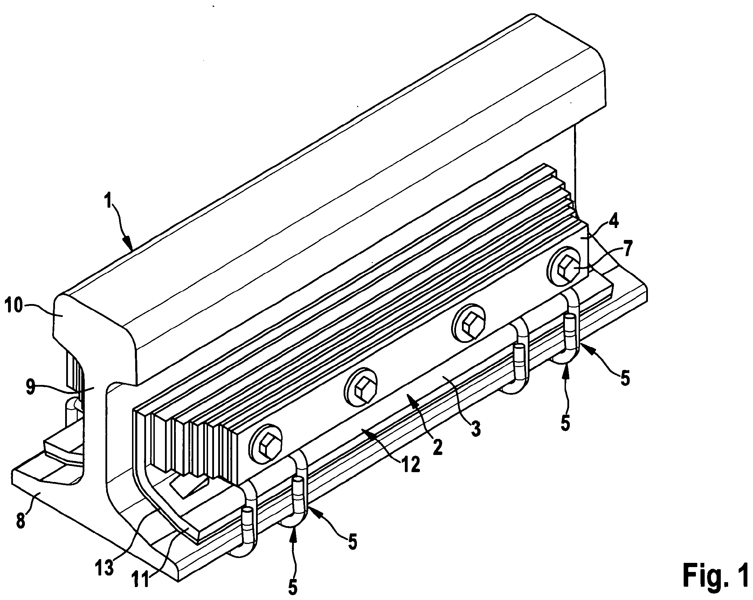

In Fig. 1 ist eine Perspektivansicht einer Schiene 1 mit einer Schwingungsabsorberanordnung 2 gemäß einer ersten Ausführungsform der Erfindung gezeigt. Die Schwingungsabsorberanordnung 2 weist dabei wenigstens eine Klemmeinrichtung 3 mit wenigstens einem Schwingungsabsorber 4, sowie wenigstens eine Klammer 5 zum Befestigen der Klemmeinrichtung 3 und ihres Schwingungsabsorbers 4 an der Schiene 1 auf.

Die im Folgenden mit Bezug auf die Figuren 1 bis 11 beschriebene Klammer 5 ist dabei ein einteilig oder einstückig ausgebildeter Federbügel. Der Federbügel ist des Weiteren aus Federstahl, z.B. einem Rundfederstahl oder einem Flachfederstahl.

Der Schwingungsabsorber 4 besteht in dem in Fig. 1 gezeigten Ausführungsbeispiel z.B. aus einem Absorberpaket 6, welches an der Klemmeinrichtung 3, z.B. durch Vulkanisieren und/oder durch Verschrauben mittels einer oder mehrere Schrauben 7, befestigt ist. Das Absorberpaket 6 in Fig. 1 besteht dabei aus mehreren Metallplatten, z.B. Stahlplatten, zwischen denen wenigstens eine elastische Schicht, z.B. eine Gummischicht, vorgesehen ist. Die Metallplatten sind dabei parallel oder im Wesentlichen parallel zu der Klemmeinrichtung 3 und der zu dämpfenden Schiene 1 angeordnet.

Durch beispielsweise die Anzahl der Stahlplatten und die elastischen Eigenschaften der Gummimischung der jeweiligen Gummischicht kann die Abstimmung des Schwingungsabsorbers 4 an die Schiene 1 erfolgen. Die Erfindung ist aber auf einen solchen Schwingungsabsorber 4 nicht beschränkt, sondern es kann jeder andere geeignete Schwingungsabsorber zum Absorbieren von Schwingungen bei Schienen eingesetzt werden.

Wie in Fig. 1 gezeigt ist, weist die Schiene 1 einen Schienenfuß 8 und einen Schienenkopf 10 auf, welche über einen Schienensteg 9 miteinander verbunden sind. Auf gegenüberliegenden Seiten des Schienenstegs 9 ist jeweils der Schwingungsabsorber 4 angeordnet.

Dazu ist jeweils die zuvor genannte Klemmeinrichtung 3 vorgesehen, beispielsweise in Form einer in Fig. 1 gezeigten Winkelplatte. Die Klemmeinrichtung 3 ist hierbei aus Metall und z.B. eine Stahlplatte oder ein Gußteil. An der Außenseite der Klemmeinrichtung 3 ist der Schwingungsabsorber 4 befestigt, beispielsweise mittels Schrauben 7, wie in Fig. 1 gezeigt ist. Die Klemmeinrichtung 3 wird mit ihrer Innenseite an der Schiene 1 angeordnet und mittels wenigstens der Klammer 5 an der Schiene 1 befestigt oder festgeklemmt.

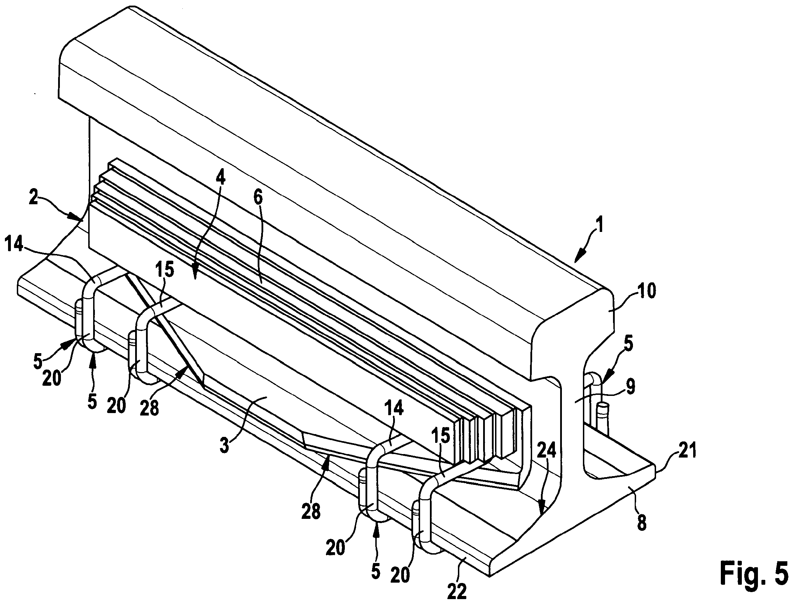

In dem in Fig. 1 gezeigten Ausführungsbeispiel weist die Klemmeinrichtung 3 einen Abschnitt 11 zur Befestigung wenigstens eines Schwingungsabsorbers 4 auf, an welchem der Schienenabsorber 4 befestigt ist, und einen Klammerbefestigungsabschnitt 12, an welchem die Klammer 5 zum Befestigen der Klemmeinrichtung 3 anbringbar ist. Die Klemmeinrichtung 3 wird hierbei, wie in Fig. 1 gezeigt ist, mit ihrem Schienenabsorberbefestigungsabschnitt 11 an dem Schienensteg 9 und mit ihrem Klammerbefestigungsabschnitt 12 an dem Schienenfuß 8 angeordnet. Der Klammerbefestigungsabschnitt 12 kann dabei, wie in dem Ausführungsbeispiel in Fig. 1 gezeigt ist, viereckig ausgebildet sein oder wie in dem Ausführungsbeispiel, wie es in nachfolgender Fig. 5 gezeigt ist, z.B. mit abgeschnittenen Ecken ausgebildet sein. Die Erfindung ist aber auf diese Ausgestaltungen der Klemmeinrichtung 3 nicht beschränkt. Der Klammerbefestigungsabschnitt 12 kann jede andere Form aufweisen, die geeignet ist, die Klemmeinrichtung 3 an einer Schiene 1 mittels wenigstens einer Klammer 5 zu befestigen.

Auf der Innenseite der Klemmeinrichtung 3 kann, wie in Fig. 1 gezeigt ist, optional wenigstens eine zusätzliche Dämpfungsschicht 13 vorgesehen werden, beispielsweise aus Gummi oder einem anderen geeigneten Material oder Materialkombination. Eine Dämpfungsschicht 13 aus einem elastischen Material, wie Gummi, erlaubt des Weiteren Toleranzunterschiede im Abstand zwischen der Innenseite der Klemmeinrichtung 3 und der Außenseite der Schiene 1 auszugleichen, so dass die Klemmeinrichtung 3 in einem dafür vorgesehenen Auflageabschnitt an der Schiene 1 ohne einen Luftspalt dazwischen anliegen kann.

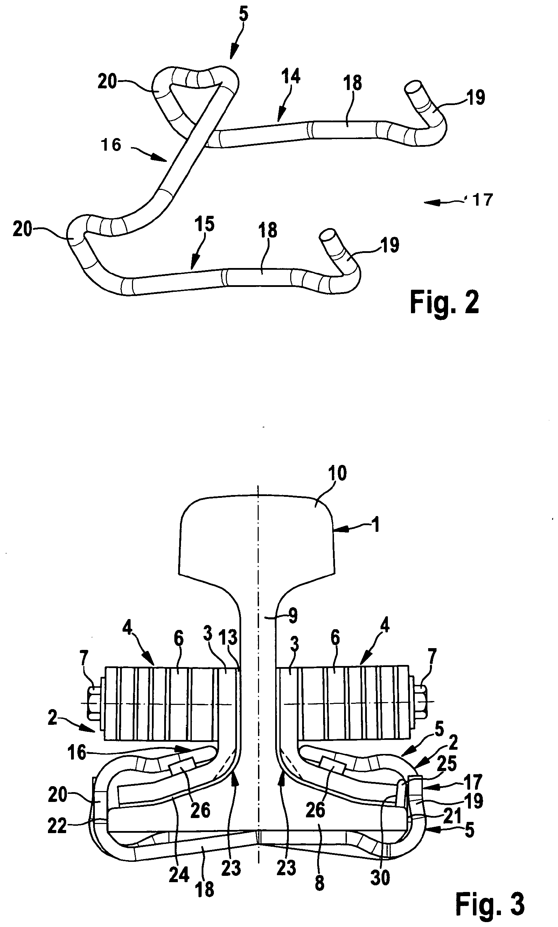

Des Weiteren ist, wie zuvor beschrieben, die Klammer 5 vorgesehen, zum Befestigen der Klemmeinrichtung 3 und deren Schwingungsabsorber 4 an der Schiene 1. Die Klammer 5 ist dabei derart ausgebildet, dass sie den Schienenfuß 8 der Schiene 1 umgreift und mit einem Ende mit der Klemmeinrichtung 3 bzw. deren Klammerbefestigungsabschnitt 12 derart in Kontakt bringbar ist, dass sie die Klemmeinrichtung 3 gegen die Schiene 1 drückt, wie in Fig. 1 gezeigt ist. Bei der in Fig. 1 gezeigten Schiene 1, wird die Klemmeinrichtung 3 mit ihrem Schwingungsabsorber 4 z.B. mit zwei Klammern 5 an der Schiene 1 befestigt, jeweils eine Klammer an jedem Ende der Klemmeinrichtung 3. In dem Fall, dass auf jeder Seite bzw. Längsseite der Schiene 1 eine Klemmeinrichtung 3 mit wenigstens einem Schwingungsabsorber 4 angebracht wird, können die Klammern 5 für die beiden Klemmeinrichtungen 3 beispielsweise ineinander gesteckt montiert werden, wie in Fig. 1 und den nachfolgenden Fig. 3-7 gezeigt ist.

In Fig. 2 ist des Weiteren eine Perspektivansicht der Klammer 5 gezeigt zum Befestigen der Klemmeinrichtung 3 und deren Schwingungsabsorber 4 an der Schiene 1 gemäß Fig. 1.

Die Klammer 5 weist, wie in Fig. 2 gezeigt ist, einen ersten Schenkel 14 und einen zweiten Schenkel 15 auf, die an einem Ende 16 miteinander verbunden sind. Die beiden Schenkel 14, 15, bilden dabei zusammen eine U-Form mit einem geschlossenen Ende 16 und einem offenen Ende 17. Das offene Ende 17 der Klammer 5 hat dabei den Vorteil, dass die Klammer 5 mit einer weiteren Klammer 5 zusammengesteckt montiert werden kann, wie zuvor mit Bezug auf Fig. 1 beschrieben wurde.

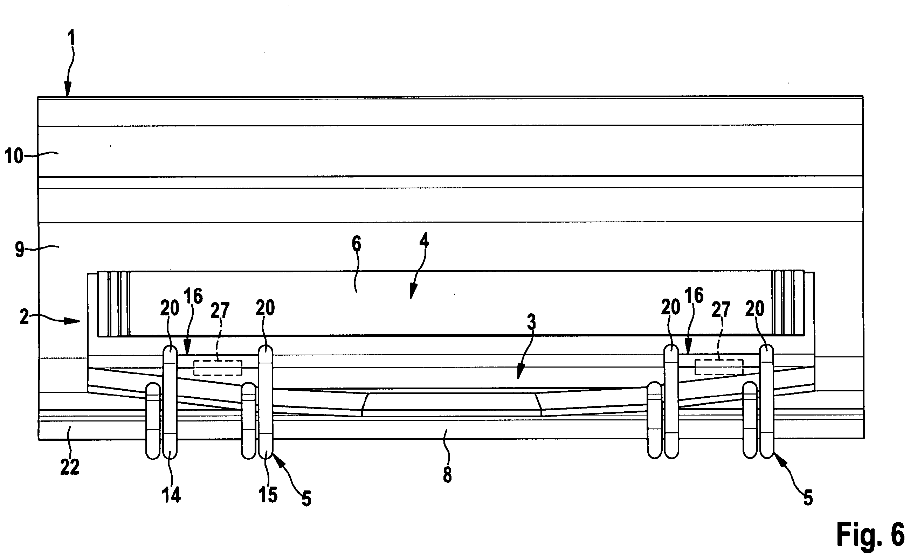

Die ersten und zweiten Schenkel 14, 15, weisen jeweils eine ersten Abschnitt 19 und einen zweiten Abschnitt 20 und einen dazwischen angeordneten mittleren Abschnitt 18 auf, der sich entlang der Unterseite des Schienenfußes 8 in Querrichtung des Schienenfußes 8 erstreckt. Der mittlere Abschnitt 18 kann, wie in Fig. 2 und nachfolgender Fig. 3 gezeigt ist, derart ausgebildet sein, dass er in montiertem Zustand an der Unterseite des Schienenfußes 8 zumindest teilweise anliegt und zusätzlich gegen den Schienenfuß 8 vorgespannt ist. Der mittlere Abschnitt 18 der Schenkel 14, 15 kann dabei zur Mitte des Schienenfußes 8 versetzt an diesem anliegen, vorzugsweise gegen den Schienenfuß 8 vorgespannt anliegen, wie in Fig. 3 gezeigt ist, oder in der Mitte des Schienenfußes 8 an diesem anliegen, vorzugsweise gegen den Schienenfuß 8 vorgespannt anliegen, wie in nachfolgender Fig. 6 gezeigt ist.

Der erste Abschnitt 19 ist derart ausgebildet, dass er sich von dem mittleren 18 Abschnitt aus nach oben entlang einer Seite 21 des Schienenfußes 8 erstreckt, beispielsweise im Wesentlichen senkrecht nach oben erstreckt, zum Umgreifen oder Einhaken der Klammer 5 an dieser Seite 21 des Schienenfußes 8.

Der zweite Abschnitt 20 ist wiederum derart ausgebildet, dass er sich von dem mittleren Abschnitt 18 aus entlang der gegenüberliegenden Seite 22 des Schienenfußes 8 nach oben erstreckt, beispielsweise im Wesentlichen senkrecht nach oben, zum Umgreifen oder Einhaken der Klammer 5 an dieser Seite 22 des Schienenfußes 8, wobei sich der zweite Abschnitt 20 sich anschließend zusätzlich über die Klemmeinrichtung 3 derart erstreckt, dass er die Klemmeinrichtung 3 umgreift und gegen die Schiene 1 in montiertem Zustand drückt.

Weiter können der erste und zweite Abschnitt 19, 20 zusätzlich derart ausgebildet sein, dass sie in montiertem Zustand zusätzlich durch den Schienenfuß 8 auseinandergedrückt sind (nicht dargestellt), um die Klammer 5 an dem Schienenfuß 8 zu befestigen.

Der zweite Abschnitt 20 ist in der in Fig. 2 und nachfolgender Fig. 3 gezeigten Ausführungsform derart ausgebildet, dass er in montiertem Zustand gegen die Klemmeinrichtung 3 vorgespannt ist und die Klemmeinrichtung 3 dabei gegen einen Abschnitt der Schiene 1, wie z.B. den Schienenfuß 8, den Schienensteg 9 und/oder den Übergangsbereich 23 zwischen dem Schienenfuß 8 und dem Schienensteg 9 presst.

In Fig. 3 ist eine Vorderansicht der Schiene 1 und der daran befestigten Klemmeinrichtungen 3 mit ihren Schwingungsabsorbern 4 gemäß der Fig. 1 und 2 gezeigt.

Wie zuvor mit Bezug auf Fig. 1 beschrieben, ist zwischen der Klemmeinrichtung 3 und der Außenseite der Schiene 1 wenigstens eine Dämpfungsschicht 13 angeordnet. Die Dämpfungsschicht 13 ist hierbei an der Klemmeinrichtung 3 befestigt, beispielsweise vulkanisiert oder aufgeklebt, um nur einige von einer Vielzahl von Möglichkeiten zu nennen, die Klemmeinrichtung 3 mit der Dämpfungsschicht 13 zu versehen. Grundsätzlich kann die Dämpfungsschicht 13 z.B. auch als separates Teil zwischen der Klemmeinrichtung 3 und der Schiene 1 eingelegt werden oder an der Schiene 1 aufgeklebt oder vulkanisiert sein.

In dem in Fig. 3 gezeigten Ausführungsbeispiel, entspricht die Kontur der Innenseite der Klemmeinrichtung 3, mit welcher diese an der Schiene 1 befestigt wird, beispielsweise der Kontur der Außenseite der Schiene 1. Die Klemmeinrichtung 3 liegt dem entsprechend vollständig mit der Dämpfungsschicht 13 an der Schiene 1 an. Alternativ kann die Klemmeinrichtung 3 mit der Dämpfungsschicht 13 auch nur an wenigstens einem Abschnitt der Schiene 1 anliegen, beispielsweise einem Abschnitt 23 des Übergangs zwischen Schienenfuß 8 und Schienensteg 9, einem Abschnitt des Schienenstegs 9 und/oder einem Abschnitt des Schienenfußes 8, wie in Fig. 3 mit einer gestrichelten Linie angedeutet ist.

Des Weiteren erstreckt sich die Klemmeinrichtung 3 teilweise oder im Wesentlichen vollständig über die Oberseite 24 des Schienenfußes 8, wie in Fig. 3 gezeigt ist.

Wie in dem Ausführungsbeispiel in Fig. 3 gezeigt ist, kann optional zusätzlich ein Lippe oder ein Haltevorsprung 25 an oder benachbart zu einer Endkante 30 des Klammerbefestigungsabschnitts 12 der Klemmeinrichtung 3 vorgesehen sein. Der Haltevorsprung 25 ist dabei derart positioniert, dass er bei montierter Klammer 5 zwischen den Schenkeln 14, 15 der Klammer 5 angeordnet ist. Des Weiteren weist der Haltevorsprung 25 eine geeignete Höhe auf, so dass die Klammer 5 beim Demontieren mit ihrem geschlossenen Ende 16 an dem Haltevorsprung 25 zunächst hängen bleiben oder von diesem gehalten werden kann. Dadurch wird ein ungewolltes Wegfliegen der Klammer 5 beim Demontieren verhindert.

Der Vorsprung 25 kann an der Endkante 30 als separates Teil, z.B. aus Gummi, befestigt sein, beispielsweise durch Kleben, Vulkanisieren usw.. Ebenso kann der Vorsprung 25 auch einteilig oder integral mit der Klemmeinrichtung 3 ausgebildet sein.

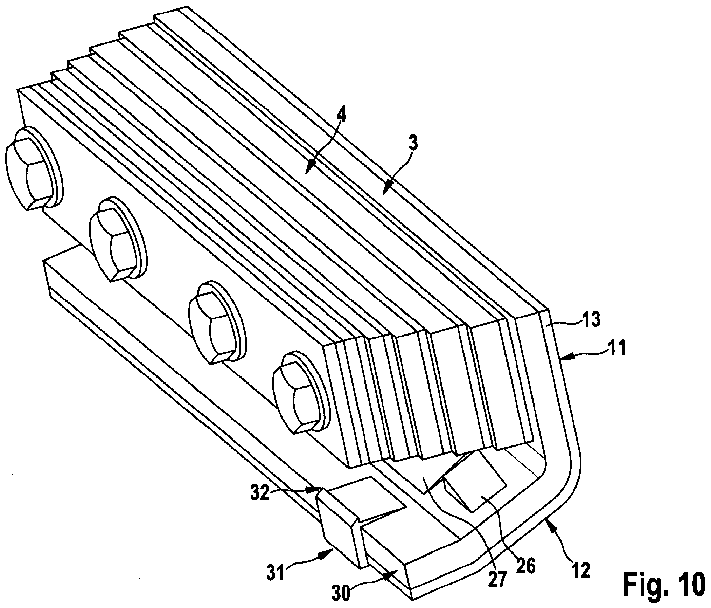

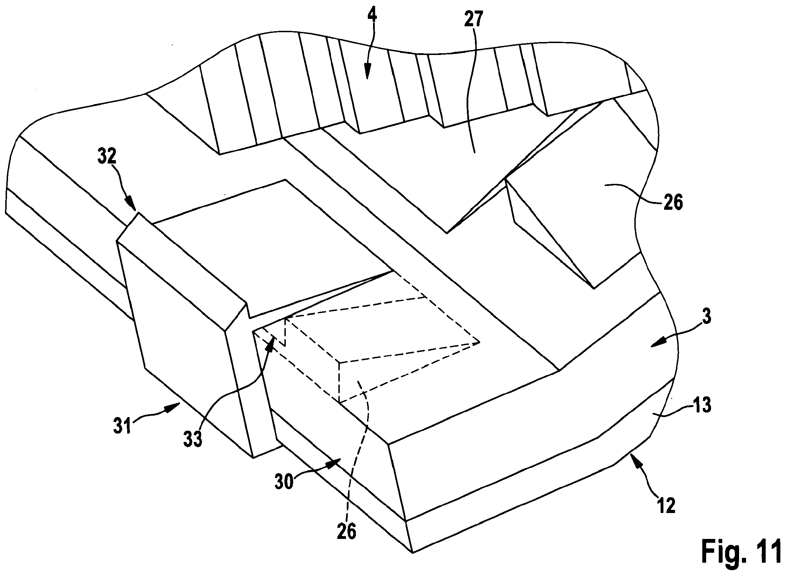

In den nachfolgenden Fig. 10 und 11 ist ein weiteres Ausführungsbeispiel des Vorsprungs 25 beschrieben.

Die Klemmeinrichtung 3 kann an ihrer Außenseite zusätzlich mit wenigstens einem seitlichen Anschlag 26 für die Klammer 5 in Form eines Vorsprungs ausgebildet sein. Der Anschlag 26 auf einer Seite der Klammer 5 dient dazu, die seitliche Bewegung der Klammer 5 bzw. die Bewegung der Klammer 5 in Längsrichtung der Klemmeinrichtung 3 und der Schiene 1 zu verhindern oder zu begrenzen.

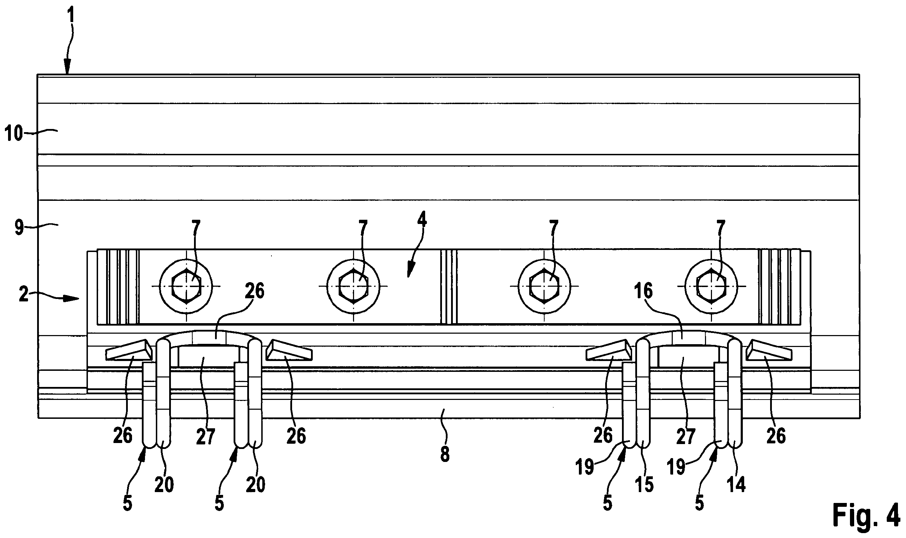

In Fig. 4 ist die Schiene 1 und die Schwingungsabsorberanordnung 2 gemäß Fig. 1 in einer Seitenansicht gezeigt.

Wie in Fig. 4 gezeigt ist, weist die Klemmeinrichtung 3 bzw. deren Klammerbefestigungsabschnitt 12 in Längsrichtung auf jeder Seite der Klammer 5 den Anschlag 26 in Form eines Vorsprungs auf, zum Fixieren der Klammer 5 in Längsrichtung der Klemmeinrichtung 3 und dem entsprechend in montiertem Zustand in Längsrichtung der Schiene 1. Die Klammer 5 wird dazu mit einem Ende zwischen die beiden Anschläge 26 eingelegt und dadurch daran gehindert sich in Längsrichtung über die Anschläge 26 ungewollt hinaus zu bewegen.

Zusätzlich oder statt der Anschläge 26 weist die Klemmeinrichtung 3, wie in Fig. 4 gezeigt ist, auf ihrer Außenseite einen Vorsprung 27 auf, zum Umgreifen durch die Klammer 5. Der Vorsprung 27 kann dabei derart mit der Klammer 5 zusammenwirken, dass diese mit ihrem geschlossenen Ende 16 in montiertem Zustand an dem Vorsprung 27 eingehängt oder lose eingehängt oder alternativ an dem Vorsprung 27 eingerastet ist.

Der Vorsprung 27 auf der Außenseite der Klemmeinrichtung 3 hat den Vorteil, dass die Klammer 5 beim Entfernen oder Demontieren nicht ungewollt wegspringen kann. Außerdem kann die Klammer 5 leichter an der Klemmeinrichtung 3 positioniert und befestigt werden, indem sie auf der einen Seite 22 des Schienenfußes 8 mit ihrem geschlossenen Ende 16 an dem Vorsprung 27 der Klemmeinrichtung 3 eingehängt oder eingerastet wird und mit dem offenen Ende 17 an der gegenüberliegenden Seite 21 des Schienenfußes 8 eingehakt wird.

Wir zusätzlich an der Endkante 30 des Klammerbefestigungsabschnitts 12 der Klemmeinrichtung 3 der Haltevorsprung 25 vorgesehen, wie in Fig. 3 und nachfolgenden Fig. 10 und 11 gezeigt ist, so kann die Klammer 5 beim Demontieren zunächst an dem Vorsprung 27 gehalten werden und ein ungewolltes Wegfliegen der Klammer 5 verhindert werden. Sobald die Klammer 5 dann von dem Vorsprung 27 gelöst ist, kann die Klammer 5 durch den Haltevorsprung 25 gehalten und am ungewollten Wegfliegen gehindert werden. Die Klammer 5 kann, wie zuvor beschrieben, an dem Haltevorsprung 25 zunächst hängen bleiben, bevor sie vollständig von der Schiene und der Klemmeinrichtung 3 entfernt wird.

Da der jeweils erste Abschnitt 18 der Klammer 5 sich nur nach oben entlang der Seite 21 des Schienenfußes 8 erstreckt, kann er zum Demontieren der Klammer 5 leicht nach unten gedrückt und dabei außer Eingriff mit dem Schienenfuß 8 gebracht werden. Dadurch lässt sich die Klammer 5 leicht für einen Benutzer lösen und die Schwingungsabsorberanordnung 2 einfach und schnell bei Bedarf wieder demontieren.

In Fig. 5 ist eine Perspektivansicht einer Schiene 1 mit einer zweiten Ausführungsform einer Schwingungsabsorberanordnung 2 gemäß der Erfindung gezeigt. Fig. 6 zeigt wiederum eine Seitenansicht der Schiene und der Schwingungsabsorberanordnung 2 gemäß Fig. 5. Die Schiene 1 ist hierbei dieselbe Schiene 1, wie in den Fig. 1-4. Bezüglich der gemeinsamen Merkmale der ersten und zweiten Ausführungsform wird auf die Beschreibung zu den Fig. 1-4 Bezug genommen, um unnötige Wiederholungen zu vermeiden.

Die Schwingungsabsorberanordnung 2 gemäß der zweiten Ausführungsform unterscheidet sich dabei von der Schwingungsabsorberanordnung gemäß der ersten Ausführungsform dadurch, dass der Klammerbefestigungsabschnitt 12 der Klemmeinrichtung 3 gemäß der zweiten Ausführungsform abgeschnittene Ecken 28 aufweist. Dies hat den Vorteil, dass die Klemmeinrichtung 3 leichter ist und trotzdem mit jeweils einer Klammer 5 am Ende an der Schiene 1 befestigt werden kann.

Weiter unterscheidet sich der Schwingungsabsorber 4 gemäß der zweiten Ausführungsform von dem Schwingungsabsorber 4 gemäß der ersten Ausführungsform dadurch, dass das Absorberpaket 6 in der zweiten Ausführungsform, wie sie in Fig. 5 gezeigt ist, durch Vulkanisieren oder Kleben an der Klemmeinrichtung 3 befestigt ist, statt durch Verschrauben, wie in der ersten Ausführungsform.

Außerdem unterscheidet sich die Form der Klammer 5 der zweiten Ausführungsform von der Form der Klammer 5 der ersten Ausführungsform, wie im Folgenden anhand der Fig. 6, 7 und 8 noch näher beschrieben wird.

Des Weiteren weist die zweite Ausführungsform keine zusätzlichen Anschläge auf, zum seitlichen Fixieren der Klammer 5, wie in der ersten Ausführungsform, sondern nur jeweils den Vorsprung 27, wie mit einer gepunkteten Linie in Fig. 5 angedeutet ist, zum Umgreifen durch das geschlossene Ende 16 der Klammer 5. Wie zuvor beschrieben ist die Klammer 5 in montiertem Zustand an dem Vorsprung 27 z.B. lediglich lose eingehängt oder an diesem eingerastet. Wie zuvor beschrieben hat der Vorsprung 27 den Vorteil, dass er das unerwünschte Abspringen der Klammer 5 beim Demontieren verhindert.

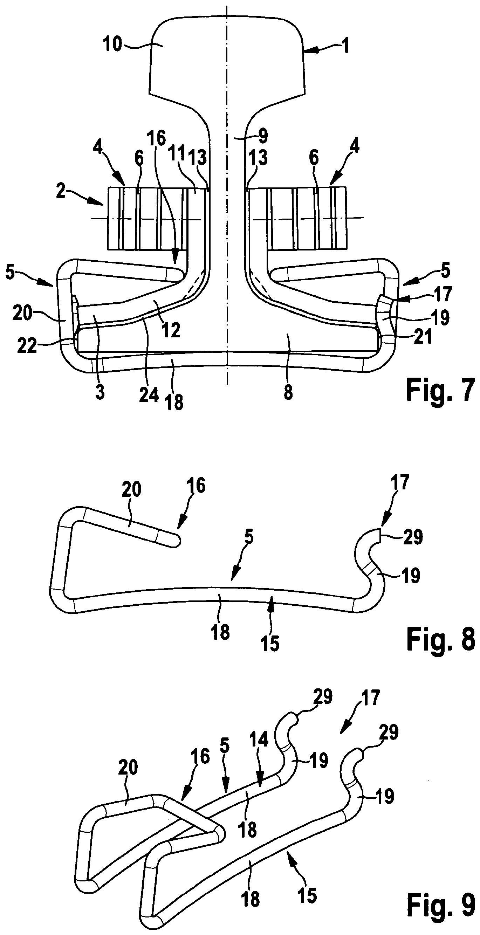

In Fig. 7 ist eine Seitenansicht der Schiene 1 und der daran befestigten Klemmeinrichtungen 3 mit ihren Schwingungsabsorbern 4 gezeigt.

Zwischen der Klemmeinrichtung 3 und der Außenseite der Schiene 1 kann dabei, wie in Fig. 7 gezeigt ist, optional ebenfalls wenigstens eine zusätzliche Dämpfungsschicht 13 angeordnet werden.

In dem in Fig. 7 gezeigten Ausführungsbeispiel, entspricht die Kontur der Innenseite der Klemmeinrichtung 3, mit welcher diese an der Schiene 1 befestigt wird, z.B. der Kontur der Außenseite der Schiene 1. Ebenso kann die Klemmeinrichtung 3 mit der Dämpfungsschicht 13 auch nur an wenigstens einem Abschnitt der Schiene 1 anliegen, beispielsweise einem Abschnitt oder Übergangsbereich 23 zwischen Schienenfuß 8 und Schienensteg 9, einem Abschnitt des Schienenstegs 9 und/oder einem Abschnitt des Schienenfußes 8, wie in Fig. 7 mit einer gestrichelten Linie angedeutet ist.

Des Weiteren erstreckt sich die Klemmeinrichtung 3 mit ihrem Klammerbefestigungsabschnitt 12, wie in Fig. 7 gezeigt ist, zumindest teilweise oder vollständig bis zur Seite 22 des Schienenfußes 8.

Zum Befestigen der Klemmeinrichtung 3 mit ihrem Schienenabsorber 4 an der Schiene 1 weist die Klammer 5 in der zweiten Ausführungsform, wie die Klammer 5 gemäß der ersten Ausführungsform, einen ersten Schenkel 14 und einen zweiten Schenkel 15 auf, die an einem Ende miteinander verbunden sind. Die beiden Schenkel 14, 15, bilden dabei zusammen eine U-Form mit einem geschlossenen Ende 16 und einem offenen Ende 17.

Die ersten und zweiten Schenkel 14, 15 weisen dabei jeweils einen ersten und zweiten Abschnitt 19 und 20 und einen dazwischen liegenden mittleren Abschnitt 18 auf. Der mittlere Abschnitt 18 erstreckt sich dabei entlang der Unterseite des Schienenfußes 8 in Querrichtung des Schienenfußes 8.

Der mittlere Abschnitt 18 kann, wie in Fig. 6 gezeigt ist, derart ausgebildet sein, dass er in montiertem Zustand an der Unterseite des Schienenfußes 8 zumindest teilweise anliegt und optional zusätzlich gegen den Schienenfuß 8 vorgespannt ist. Der mittlere Abschnitt 18 der Schenkel 14, 15 kann dabei, wie zuvor in Fig. 3 gezeigt ist, zur Mitte des Schienenfußes 8 seitlich versetzt an diesem anliegen und optional zusätzlich gegen den Schienenfuß 8 vorgespannt sein, oder in der Mitte des Schienenfußes 8 an diesem anliegen, und optional zusätzlich gegen diesen vorgespannt sein, wie in Fig. 6 dargestellt ist.

Der erster Abschnitt 19 der Klammerschenkel 14, 15 ist derart ausgebildet, dass er sich von dem mittleren Abschnitt 18 aus nach oben entlang einer Seite 21 des Schienenfußes 8 erstreckt zum Umgreifen oder Einhaken der Klammer 5 an dieser Seite 21 des Schienenfußes 8. Der erste Abschnitt 19 ist dabei, vorzugsweise mit seinem äußeren Ende 29 zusätzlich leicht nach außen gekrümmt oder, wie in den nachfolgenden Fig. 7 und 8 gezeigt, nach außen von der Klemmeinrichtung 3 bzw. der Schiene 1 weggebogen. Dies hat den Vorteil, dass die Schiene 1 bei der Montage zusätzlich vor ungewollten Einkerbungen durch scharfkantige Enden der Klammer 5 geschützt wird.

Der zweiter Abschnitt 20 ist wiederum derart ausgebildet, dass er sich von dem mittleren Abschnitt 18 aus zunächst nach oben entlang der gegenüberliegenden Seite 22 des Schienenfußes 8 zum Einhaken an dem Schienenfuß 8 erstreckt und anschließend entlang der Klemmeinrichtung 3. Der zweite Abschnitt 18 knickt dabei, wie in Fig. 6 gezeigt ist, beispielsweise nach unten zu der Klemmeinrichtung 3 ab, um die Klemmeinrichtung 3 in montiertem Zustand gegen die Schiene 1 zu pressen.

Weiter können der erste und zweite Abschnitt 19, 20 optional derart ausgebildet sein, dass sie in montiertem Zustand auseinander gedrückt sind, wie in Fig. 7 gezeigt ist, und seitlich gegen den Schienenfuß 8 vorgespannt sind, um die Klammer 5 an dem Schienenfuß 8 zu befestigen.

Der zweite Abschnitt 20 ist in der in Fig. 7 gezeigten Ausführungsform derart ausgebildet, dass er gegen die Außenseite der Klemmeinrichtung 3 vorgespannt ist und die Klemmeinrichtung 3 gegen die Schiene 1 in montiertem Zustand drückt oder presst, beispielsweise gegen den Schienenfuß 8, den Schienensteg 9 und/oder den Übergangsbereich 23 zwischen dem Schienenfuß 8 und dem Schienensteg 9.

In Fig. 8 und 9 ist eine weitere Ausführungsform der Klammer 5 gemäß Fig. 5, 6 und 7 gezeigt. Fig. 8 zeigt die Klammer 5 dabei in einer Seitenansicht und Fig. 9 in einer Perspektivansicht. Die Klammer 5 gemäß der Ausführungsform in den Fig. 8 und 9 unterscheidet sich dabei von der Klammer 5 in den Fig. 5, 6 und 7 lediglich dadurch, dass die äußeren Enden 29 der Klammer 5 nach außen gebogen oder von der Klemmeinrichtung 3 und damit der Schiene 1 weggebogen sind, so dass ungewollte Einkerbungen an der Schiene 1 beim Montieren der Klammer 5 verhindert werden können.

In den Fig. 10 und 11 ist des Weiteren eine Klemmeinrichtung 3 und ein Schwingungsabsorber 4 gemäß einer erfindungsgemäßen Schwingungsabsorberanordnung gezeigt. Fig. 10 zeigt dabei eine Perspektivansicht und Fig. 11 einen Ausschnitt der Klemmeinrichtung 3 und des an ihr befestigten Schwingungsabsorbers 4.

Die Klemmeinrichtung 3 weist einen Befestigungsabschnitt 11 für den wenigstens einen Schwingungsabsorber 4 und einen Klammerbefestigungsabschnitt 12 zur Befestigung wenigstens einer Klammer 5 auf. Des Weiteren weist die Klemmeinrichtung 3 auf ihrer Unterseite, wie in dem Ausführungsbeispiel in Fig. 10 und 11 gezeigt ist, optional eine zusätzliche Dämpfungsschicht 13 auf. Diese ist an der Unterseite der Klemmeinrichtung 3, beispielsweise durch Aufkleben, Vulkanisieren usw., befestigt.

Außerdem weist die Klemmeinrichtung 3 auf der Außenseite ihres Klammerbefestigungsabschnitts 12 einmal einen Vorsprung 27 auf, zum Umgreifen durch das geschlossene Ende 16 der Klammer 5, sowie auf beiden Seiten des Vorsprungs 27 in Längsrichtung der Klemmeinrichtung 3 jeweils einen Anschlag 26 zum Begrenzen der Bewegung der Klammer 5 in Längsrichtung. Der Vorsprung 27 und die Anschläge 26 wurden zuvor bereits mit Bezug auf die Fig. 3, 4 und 6 beschrieben und dargestellt.

Der Haltevorsprung 25, wie er zuvor mit Bezug auf Fig. 3 beschrieben wurde, ist in der Ausführungsform, wie sie in den Fig. 10 und 11 gezeigt ist, beispielsweise als Klammerelement 31 mit einer Erhebung 32 ausgebildet. Das Klammerelement 31 weist hierbei z.B. eine U-Form auf, mit welcher es auf die Endkante 30 des Klammerbefestigungsabschnitts 12 beispielsweise aufgesteckt oder aufgeklemmt ist und zusätzlich oder alternativ mit der Klemmeinrichtung 3 verklebt und/oder auf diese aufvulkanisiert sein. Die Erhebung 32 des Klammerelements 31 ist dabei mit dem Vorsprung 27 fluchtend auf der Oberseite der Klemmeinrichtung 3 angeordnet.

In einem weiteren Ausführungsbeispiel kann der Anschlag 26 statt in Längsrichtung des Klemmeinrichtung 3 neben dem Vorsprung 27 auch neben dem Haltevorsprung 25 vorgesehen werden, um eine ungewollte seitliche Bewegung der Klammer zu verhindern.

Der Anschlag 26 kann dabei neben dem Haltevorsprung 25 angeordnet oder auch in einem weiteren Ausführungsbeispiel direkt an dem Haltevorsprung 25 ausgebildet sein, wie in Fig. 11 mit einer gestrichelten Linie angedeutet ist. Statt nur auf einer Seite, wie in Fig. 11 gezeigt, kann der Haltervorsprung 25 auch auf beiden Seiten mit dem Anschlag 26 ausgebildet sein.

Der in Fig. 11 gezeigte Anschlag 26, welcher auf der Seite des Vorsprungs 27 in Längsrichtung der Klemmeinrichtung 3 angeordnet ist, kann daher entfallen.

Der Haltevorsprung 25 kann mit dem Anschlag 26 einteilig, beispielsweise aus Metall und/oder Gummi, ausgebildet und an der Klemmeinrichtung 3 befestigt sein. Ebenso kann die Klemmeinrichtung 3 zusammen mit dem Haltevorsprung 25 und dessen Anschlag 26 einteilig aus Metall ausgebildet sein.

Bei einem Haltevorsprung 25 und einem Anschlag 26 aus Metall ist zwischen der Erhebung 32 des Haltevorsprungs 25 und dem Anschlag 26 ein Spalt 33 vorgesehen zum Aufnehmen des jeweiligen Schenkels der Klammer. Sind der Haltevorsprung 25 und sein Anschlag dagegen aus einem elastischen Material, wie beispielsweise Gummi, so kann auch z.B. auf den Spalt 33 verzichtet werden.

Eine Klammer zum Befestigen der Klemmeinrichtung 3 an einer Schiene umgreift in montiertem Zustand den Vorsprung 27 mit ihrem geschlossenen Ende, wobei der Haltevorsprung 25 dabei auf der Innenseite der Schenkel bzw. zwischen den Schenkeln der Klammer angeordnet ist. Sobald das geschlossene Ende der Klammer beim Demontieren von dem Vorsprung 27 heruntergleitet und sich in Richtung der Endkante 30 der Klemmeinrichtung 3 bewegt, bleibt das geschlossene Ende der Klammer zunächst an dem Haltevorsprung 25 hängen und kann dadurch nicht ungewollt wegspringen.

Statt einem Klammerelement 31 mit einer Erhebung 32, wie in Fig. 10 und 11 gezeigt, kann eine derartige Erhebung auch ohne das Klammerelement 31 auf der Oberseite der Klemmeinrichtung befestigt oder einteilig mit der Klemmeinrichtung 3 ausgebildet werden (nicht dargestellt).

Der Haltevorsprung 25 kann an der Klemmeinrichtung aufgeklemmt, aufgeklebt und/oder aufvulkanisiert werden oder alternativ einteilig mit dieser ausgebildet werden.
Wie zuvor beschrieben hat der Haltevorsprung 25 den Vorteil, dass die Klammer an dem Haltevorsprung 25 beim Demontieren zusätzlich hängen bleiben kann, so dass sie nicht ungewollt wegfliegt. Des Weiteren kann die Klammer beim Vormontieren zunächst an dem Haltevorsprung 25 eingreifen, so dass sie nicht herunterrutschen kann. Die Klammer 5 kann somit im Nachgang mit einer geeigneten Vorrichtung leicht montiert werden.

Obwohl die vorliegende, durch den unabhängigen Anspruch 1 definierte Erfindung vorstehend anhand der bevorzugten Ausführungsbeispiele beschrieben wurde, ist sie darauf nicht beschränkt, sondern auf vielfältige Art und Weise modifizierbar. Insbesondere sind die zuvor beschriebenen Ausführungsbeispiele miteinander kombinierbar, insbesondere einzelne Merkmale davon.

Insbesondere können bei den zuvor beschriebenen erfindungsgemäßen Ausführungsformen der Schwinungsabsorberanordnung, die Klammern, Schwingungsabsorber und/oder Klemmeinrichtungen der einzelnen Ausführungsformen und Ausführungsbeispiele miteinander kombiniert werden.

### Bezugszeichenliste

- 1: Schiene
- 2: Schwingungsabsorberanordnung
- 3: Klemmeinrichtung
- 4: Schwingungsabsorber
- 5: Klammer
- 6: Absorberpaket
- 7: Schraube
- 8: Schienenfuß
- 9: Schienensteg
- 10: Schienenkopf
- 11: Befestigungsabschnitt für den Schwingungsabsorber
- 12: Klammerbefestigungsabschnitt
- 13: Dämpfungsschicht
- 14: Erster Schenkel
- 15: Zweiter Schenkel
- 16: Geschlossenes Ende der Klammer
- 17: Offenes Ende der Klammer
- 18: Mittlerer Abschnitt des Schenkels der Klammer
- 19: Erster Abschnitt des Schenkels der Klammer
- 20: Zweiter Abschnitt des Schenkels der Klammer
- 21: Seite des Schienenfuß
- 22: Gegenüberliegende andere Seite des Schienenfuß
- 23: Übergangsbereich von Schienenfuß und Schienensteg
- 24: Oberseite des Schienenfuß
- 25: Haltevorsprung
- 26: Anschlag in Form eines Vorsprungs
- 27: Vorsprung
- 28: Abgeschnittene Ecken
- 29: Äußeres Ende des ersten Abschnitts des Schenkels der Klammer
- 30: Endkante des Klammerbefestigungsabschnitts der Klemmeinrichtung
- 31: Klammerelement
- 32: Erhebung
- 33: Spalt

## Patentansprüche

1. Schwingungsabsorberanordnung (2) zum Anbringen wenigstens eines Schwingungsabsorbers (4) an einer Schiene (1) aufweisend:
einen Schwingungsabsorber (4); eine Klemmeinrichtung (3), welche einen Klammerbefestigungsabschnitt (12) und einen Absorberbefestigungsabschnitt (11) für den wenigstens einen Schwingungsabsorber (4) aufweist, wobei der Schwingungsabsorber (4) an der Außenseite des Absorberbefestigungsabschnitts (11) befestigt ist, wobei die Klemmeinrichtung (3) mit ihrem Absorberbefestigungsabschnitt (11) mit dessen Innenseite an einem Schienensteg (9) der Schiene (1) und mit ihrem Klammerbefestigungsabschnitt 12 an einem Schienenfuß (8) der Schiene (1) anbringbar ist; eine Klammer (5) zum Befestigen der Klemmeinrichtung (3) an der Schiene (1), die als einstückiger Federbügel ausgebildet ist; **dadurch gekennzeichnet, dass** die Klammer (5) derart ausgebildet ist, dass sie im montierten Zustand den Schienenfuß (8) der Schiene (1) umgreift und mit einem ersten Ende (16) den Klammerbefestigungsabschnitt (12) gegen den Schienenfuß (8) der Schiene (1) presst; und wobei die Klammer (5) wenigstens einen oder zwei Schenkel (14, 15) aufweist, mit jeweils einem ersten und einem zweiten Abschnitt (19, 20) und einem dazwischen angeordneten mittleren Abschnitt (18), welcher sich entlang der Unterseite des Schienenfußes (8) erstreckt, wobei der erste Abschnitt (19) sich von dem mittleren (18) Abschnitt aus nach oben entlang einer Seite (21) des Schienenfußes (8) erstreckt zum Einhaken der Klammer (5) an dieser Seite (21) des Schienenfußes (8) und der zweite Abschnitt (20) sich von dem mittleren Abschnitt (18) aus nach oben entlang der gegenüberliegenden Seite (22) des Schienenfußes (8) und anschließend entlang der Klemmeinrichtung (3) erstreckt, derart dass er den Klammerbefestigungsabschnitt (12) umgreift und gegen die Schiene (1) presst.

2. Schwingungsabsorberanordnung nach Anspruch 1, **dadurch gekennzeichnet, dass** die Klemmeinrichtung (3) zumindest in einem Abschnitt oder vollständig an der Schiene (1) aufliegt, wobei vorzugsweise zumindest zwischen die Klemmeinrichtung (3) und der Schiene (1) wenigstens eine Dämpfungsschicht (13) vorgesehen ist, wobei die Dämpfungsschicht (13) besonders bevorzugt an einer Innenseite der Klemmeinrichtung (3) befestigt ist.

3. Schwingungsabsorberanordnung nach einem der vorstehenden Ansprüche, **dadurch gekennzeichnet, dass** die Klemmeinrichtung (3) einen Vorsprung (27) aufweist zum Einhängen oder Einrasten des ersten Endes (16) der Klammer (5).

4. Schwingungsabsorberanordnung nach einem der vorstehenden Ansprüche, **dadurch gekennzeichnet, dass** die Klemmeinrichtung (3) in Längsrichtung wenigstens einen Anschlag (26) für die Klammer (5) aufweist, wobei die Klemmeinrichtung (3) in Längsrichtung vorzugsweise zwei Anschläge (26) aufweist, zwischen die die Klammer (5) einlegbar ist.

5. Schwingungsabsorberanordnung nach Anspruch 1, **dadurch gekennzeichnet, dass** zwei Schenkel (14, 15) vorgesehen sind und wenigstens die beiden zweiten Abschnitte (20) der zwei Schenkel (14, 15) miteinander verbunden sind und ein geschlossenes erstes Ende (16) der Klammer (5) bilden.

6. Schwingungsabsorberanordnung nach einem der vorstehenden Ansprüche, **dadurch gekennzeichnet, dass** die Klemmeinrichtung (3) einen Haltevorsprung (25) aufweist, wobei der Haltevorsprung (25) an oder benachbart zu einer Endkante (30) des Klammerbefestigungsabschnitts (12) der Klemmeinrichtung (3) angeordnet ist und der Haltevorsprung (25) einteilig mit der Klemmeinrichtung (3) ausgebildet oder als separates Teil an der Klemmeinrichtung (3) befestigt ist.

7. Schwingungsabsorberanordnung nach einem der vorstehenden Ansprüche, **dadurch gekennzeichnet, dass** der Klammerbefestigungsabschnitt (12) der Klemmeinrichtung (3) wenigstens eine abgeschnittene Ecke (28) aufweist.

8. Schwingungsabsorberanordnung nach einem der vorstehenden Ansprüche, **dadurch gekennzeichnet, dass** das äußere Ende (29) des jeweils ersten Abschnitts (19) der Klammer (5) nach außen gewölbt oder nach außen von der Schiene (1) weggebogen ist.

9. Schwingungsabsorberanordnung nach Anspruch 8, **dadurch gekennzeichnet, dass** die Klammer (5) aus Federstahl und vorzugsweise aus einem Federrundstahl oder einem Federflachstahl hergestellt ist.

10. Schwingungsabsorberanordnung nach einem der vorstehenden Ansprüche, **dadurch gekennzeichnet, dass** der Schwingungsabsober (4) ein Absorberpaket (6) mit wenigstens zwei Platten, vorzugsweise Metallplatten, und wenigstens einer dazwischen angeordneten elastischen Schicht aufweist.

11. Schwingungsabsorberanordnung nach Anspruch 6, **dadurch gekennzeichnet, dass** der Haltevorsprung (25) mit einem Vorsprung (27) zum Einhängen oder Einrasten des ersten Endes (16) der Klammer (5) in Querrichtung der Klemmeinrichtung (3) fluchtend angeordnet ist.

12. Schwingungsabsorberanordnung nach Anspruch 4, **dadurch gekennzeichnet, dass** der Anschlag (26) neben dem Vorsprung (27) oder dem Haltevorsprung (25) in Längsrichtung der Klemmeinrichtung (3) an dieser vorgesehen ist.

## Claims

1. Vibration absorber arrangement (2) for attaching at least one vibration absorber (4) to a rail (1), comprising:
a vibration absorber (4);
a clamping means (3) which has a bracket fastening portion (12) and an absorber fastening portion (11) for the at least one vibration absorber (4), the vibration absorber (4) being fastened to the outer face of the absorber fastening portion (11), the inner face of the absorber fastening portion (11) of the clamping means (3) being attachable to a rail web (9) of the rail (1) and the bracket fastening portion (12) of said means being attachable to a rail foot (8) of the rail (1);
a bracket (5) for fastening the clamping means (3) to the rail (1), which is formed as a single-piece spring clip;
**characterised in that**
the bracket (5) is formed in such a way that it engages around the rail foot (8) of the rail (1) when mounted and, via a first end (16), presses the bracket fastening portion (12) against the rail foot (8) of the rail (1);
and wherein the bracket (5) has at least one or two limbs (14, 15), each having a first and a second portion (19, 20) and a central portion (18) which is arranged in between and which extends along the lower face of the rail foot (8), the first portion (19) extending upwards from the central portion (18) along a face (21) of the rail foot (8) to hook in the bracket (5) on this face (21) of the rail foot (8), and the second portion (20) extending upwards from the central portion (18) along the opposite face (22) of the rail foot (8) and subsequently along the clamping direction (3), in such a way that it engages around the bracket fastening portion (12) and
presses it against the rail (1).

2. Vibration absorber arrangement according to claim 1, **characterised in that** the clamping means (3) is positioned, at least in a portion or entirely, on the rail (1), at least one damping layer (13) preferably being provided between the clamping means (3) and the rail (1), the damping layer (13) particularly preferably being fastened to an inner face of the clamping means (3).

3. Vibration absorber arrangement according to any of the preceding claims, **characterised in that** the clamping means (3) has a projection (27) for suspending or latching the first end (16) of the bracket (5).

4. Vibration absorber arrangement according to any of the preceding claims, **characterised in that** the clamping means (3) has at least one stop (26) for the bracket (5) in the longitudinal direction, the clamping means (3) preferably having two stops (26) in the longitudinal direction, between which the bracket (5) can be laid.

5. Vibration absorber arrangement according to claim 1, **characterised in that** two limbs (14, 15) are provided and at least the two second portions (20) of the two limbs (14, 15) are interconnected and form a closed first end (16) of the bracket (5).

6. Vibration absorber arrangement according to any of the preceding claims, **characterised in that** the clamping means (3) has as holding projection (25), the holding projection (25) being arranged on or adjacent to an end edge (30) of the bracket fastening portion (12) of the clamping means (3), and the holding projection (25) being formed in a single piece with the clamping means (3) or fastened to the clamping means (3) as a separate part.

7. Vibration absorber arrangement according to any of the preceding claims, **characterised in that** the bracket fastening portion (12) of the clamping means (3) has at least one truncated corner (28).

8. Vibration absorber arrangement according to any of the preceding claims, **characterised in that** the outer end (29) of the first portion (19) of the bracket (5) in each case is curved outwards or bent outwards away from the rail (1).

9. Vibration absorber arrangement according to claim 8, **characterised in that** the bracket (5) is made of spring steel and preferably from a round spring steel or a flat spring steel.

10. Vibration absorber arrangement according to any of the preceding claims, **characterised in that** the vibration absorber (4) comprises an absorber packet (6) having at least two plates, preferably metal plates, and at least one resilient layer arranged in between.

11. Vibration absorber arrangement according to claim 6, **characterised in that** the holding projection (25) is arranged flush with a projection (27) for suspending or latching the first end (16) of the bracket (5) in the transverse direction of the clamping means (3).

12. Vibration absorber arrangement according to claim 4, **characterised in that** the stop (26) is provided on the clamping means (3) alongside the projection (27) or the holding projection (25) in the longitudinal direction of the said means.

## Revendications

1. Système amortisseur de vibrations (2) destiné au montage d'au moins un amortisseur de vibrations (4) sur un rail (1), comportant :
un amortisseur de vibrations (4) ;
un moyen de serrage (3), qui comporte une portion de fixation d'agrafe (12) et une portion de fixation d'amortisseur (11) pour l'au moins un amortisseur de vibrations (4),
l'amortisseur de vibrations (4) étant fixé au côté extérieur de la portion de fixation d'amortisseur (11),
le moyen de serrage (3) pouvant être monté avec sa portion de fixation d'amortisseur (11), avec le côté intérieur de celle-ci, sur une âme de rail (9) du rail (1) et avec sa portion de fixation d'agrafe (12) sur un patin de rail (8) du rail (1) ;
une agrafe (5) destinée à fixer le moyen de serrage (3) au rail (1), qui est réalisée sous la forme d'un étrier de ressort d'un seul tenant ;
**caractérisé en ce que**
l'agrafe (5) est réalisée de telle manière que,
lorsqu'elle est montée, elle entoure le patin de rail (8) du rail (1) et presse avec une première extrémité (16) la portion de fixation d'agrafe (12) contre le patin de rail (8) du rail (1) ; et l'agrafe (5) comportant au moins une ou deux branches (14, 15), dotées respectivement d'une première et d'une seconde portion (19, 20) et d'une portion intermédiaire (18) disposée entre elles, qui s'étend le long du côté inférieur du patin de rail (8), la première portion (19) s'étendant à partir de la portion intermédiaire (18) vers le haut le long d'un côté (21) du patin de rail (8) pour l'accrochage de l'agrafe (5) sur ce côté (21) du patin de rail (8) et la seconde portion (20) s'étendant à partir de la portion intermédiaire (18) vers le haut le long du côté opposé (22) du patin de rail (8) et ensuite le long du moyen de serrage (3), de sorte qu'elle entoure la portion de fixation d'agrafe (12) et appuie contre le rail (1).

2. Système amortisseur de vibrations selon la revendication 1, **caractérisé en ce que** le moyen de serrage (3) repose au moins en partie ou entièrement sur le rail (1), au moins une couche d'amortissement (13) étant de préférence prévue au moins entre le moyen de serrage (3) et le rail (1), la couche d'amortissement (13) étant fixée de manière particulièrement préférentielle à un côté intérieur du moyen de serrage (3).

3. Système amortisseur de vibrations selon l'une des revendications précédentes, **caractérisé en ce que** le moyen de serrage (3) comporte une saillie (27) destinée à l'accrochage ou l'enclenchement de la première extrémité (16) de l'agrafe (5).

4. Système amortisseur de vibrations selon l'une des revendications précédentes, **caractérisé en ce que** le moyen de serrage (3) comporte dans la direction longitudinale au moins une butée (26) pour l'agrafe (5), le moyen de serrage (3) comportant dans la direction longitudinale de préférence deux butées (26), entre lesquelles l'agrafe (5) peut être placée.

5. Système amortisseur de vibrations selon la revendication 1, **caractérisé en ce que** deux branches (14, 15) sont prévues et au moins les deux secondes portions (20) des deux branches (14, 15) sont reliées entre elles et forment une première extrémité (16) fermée de l'agrafe (5).

6. Système amortisseur de vibrations selon l'une des revendications précédentes, **caractérisé en ce que** le moyen de serrage (3) comporte une saillie de retenue (25), la saillie de retenue (25) étant disposée sur ou à côté d'un bord d'extrémité (30) de la portion de fixation d'agrafe (12) du moyen de serrage (3) et la saillie de retenue (25) étant réalisée d'un seul tenant avec le moyen de serrage (3) ou étant fixée sous la forme d'une pièce séparée au moyen de serrage (3).

7. Système amortisseur de vibrations selon l'une des revendications précédentes, **caractérisé en ce que** la portion de fixation d'agrafe (12) du moyen de serrage (3) comporte au moins un coin coupé (28).

8. Système amortisseur de vibrations selon l'une des revendications précédentes, **caractérisé en ce que** l'extrémité extérieure (29) de la première portion (19) respective de l'agrafe (5) est courbée vers l'extérieur ou pliée vers l'extérieur par rapport au rail (1).

9. Système amortisseur de vibrations selon la revendication 8, **caractérisé en ce que** l'agrafe (5) est fabriquée en acier à ressort et de préférence en acier à ressort rond ou en acier à ressort plat.

10. Système amortisseur de vibrations selon l'une des revendications précédentes, **caractérisé en ce que** l'amortisseur de vibrations (4) comporte un empilage amortisseur (6) comprenant au moins deux plaques, de préférence des plaques métalliques, et au moins une couche élastique disposée entre celles-ci.

11. Système amortisseur de vibrations selon la revendication 6, **caractérisé en ce que** la saillie de retenue (25) est disposée en alignement avec une saillie (27) destinée à l'accrochage ou l'enclenchement de la première extrémité (16) de l'agrafe (5) dans la direction transversale du moyen de serrage (3).

12. Système amortisseur de vibrations selon la revendication 4, **caractérisé en ce que** la butée (26) est prévue sur le moyen de serrage (3) à côté de la saillie (27) ou de la saillie de retenue (25) dans la direction longitudinale de celui-ci.
